(19) Europäisches Patentamt
European Patent Office
Office européen des brevets

(11) **EP 2 360 446 A1**

(12) **EUROPEAN PATENT APPLICATION**
published in accordance with Art. 153(4) EPC

(43) Date of publication:
**24.08.2011 Bulletin 2011/34**

(51) Int Cl.:
*G01B 21/22* (2006.01)     *G01C 21/12* (2006.01)
*G01C 9/00* (2006.01)     *E04G 21/04* (2006.01)

(21) Application number: **10834071.2**

(22) Date of filing: **22.06.2010**

(86) International application number:
**PCT/CN2010/074215**

(87) International publication number:
**WO 2011/075983 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.12.2009  CN 200910260064**

(71) Applicants:
• **Hunan Sany Intelligent Control Equipment Co.,
Ltd**
**Hunan 410100 (CN)**
• **Sany Heavy Industry Co., Ltd.**
**Changsa**
**Hunan 410100 (CN)**

(72) Inventors:
• **YI, Xiaogant**
**Hunan 410100 (CN)**
• **ZHOU, Xiang**
**Hunan 410100 (CN)**
• **WANG, Wei**
**Hunan 410100 (CN)**

(74) Representative: **Schmitz, Alexander
Maiwald Patentanwalts GmbH
Elisenhof
Elisenstraße 3
D-80335 München (DE)**

(54) **ANGLE MEASURING APPARATUS AND METHOD THEREOF AND ENGINEERING MACHINERY**

(57)     An angle measurement device includes a microprocessor (100), a primary acceleration transducer (210), an output device (300), and an auxiliary acceleration transducer (220). There is a predetermined angle between a positive direction of a primary sensitive axis of the primary acceleration transducer (210) and that of a auxiliary sensitive axis of the auxiliary acceleration transducer (220); the primary acceleration transducer (210) and the auxiliary acceleration transducer (220) output respectively a first initial parameter and a second initial parameter; the microprocessor (100) obtains a first actual parameter of the primary acceleration transducer (210) according to the first initial parameter, the second initial parameter and the predetermined angle and then gets an angle parameter according to the first actual parameter; the first actual parameter characterizes the parameter of the primary acceleration transducer (210) in the case of no external interference. An angle measurement method and a construction machinery with the angle measurement device is also provided. The provided angle measurement device and method can obtain measuring result in dynamic state accurately.

Fig. 1

**Description**

**CROSS REFERENCE TO RELATED APPLICATION**

This application claims priority to Chinese Patent Application No.200910260064.4, filed with the Chinese Patent Office on December 24, 2009 and entitled "ANGLE MEASUREMENT DEVICE, ANGLE MEASUREMENT METHOD AND CONSTRUCTION MACHINERY", which is hereby incorporated by reference in its entirety.

**FIELD OF THE INVENTION**

The present disclosure relates to a technique for measuring angle, in particular, to a device and method of angle measurement as well as a construction machinery equipped with the device for angle measurement.

**BACKGROUND OF THE INVENTION**

An angle measurement device based on acceleration transducer has advantages of compact size, low power consumption, quick response, high reliability, etc. Such angle measurement device has been widely used in the field of construction machinery to measure angle parameters of predetermined component at real time, so as to provide position information for controlling the construction machinery.

Generally, the acceleration transducer includes a sensitive element, for moving along a direction of a predetermined sensitive axis when subjected to an applied force, wherein a displacement caused by moving is in proportion to born acting force, such that the bom action force can be determined by the displacement, and further the measurement can be carried out for the acceleration. During the measurement, the displacement of the sensitive element is initially converted into a corresponding electrical signal, and then the obtained electrical signal is converted into a digital signal via amplifying, noise reducing, and analog-digital conversion. Finally, according to the predetermined relationship between the signal and the acceleration, the acceleration of the measured component in the direction of the sensitive axis can be obtained, or the direction and the magnitude of the force applied on the measured component can also be obtained.

The operating principle of the angle measurement device based on acceleration transducer is that, when the acceleration transducer is placed horizontally, the force generated by the sensitive element being subjected to gravity in the direction of the sensitive axis is equal to zero, and the acceleration transducer outputs a predetermined parameter, i.e. the parameter zeroset output when the angle measurement device is at zero position. When there is a certain angle between the sensitive axis of the angle measurement device and the horizontal plane, a corresponding component force of gravity will be generated in the direction of the sensitive axis, which will drive the sensitive element to move by a corresponding displacement; in this case, the acceleration transducer outputs a parameter X for characterizing the acceleration, which is corresponding to the angle, then a microprocessor processes the output parameter and outputs an angle parameter according to the predetermined positive and negative direction of the sensitive axis. A method for obtaining the angle parameter can be: $\alpha = \arcsin\{(X ----- \text{zeroset})/\text{sensitivity}\}$, wherein $\alpha$ is the angle parameter, sensitivity is the sensitivity coefficient of the angle measurement device; X-zeroset indicates a value corresponding to the displacement of the sensitive element in the direction of the sensitive axis. Of course, the angle measurement device can adjust the angle parameter according to the initial position, angle and measuring aim to make the output angle parameter satisfy the predetermined requirement and to achieve the predetermined aim.

According to the above description, the angle parameter output by the angle measurement, device based on acceleration transducer depends on the angle between the sensitive axis and the gravity direction, particularly on the angle between the predetermined positive direction of the sensitive axis and the gravity direction.

As can be seen from the above description, measuring the angle parameter by the angle measurement device requires the conditions that the acceleration transducer is in a static state and the sensitive element is only subjected to gravity. Thereby, the angle parameter obtained when the acceleration transducer is in a dynamic state is difficult to indicate the actual angle accurately.

However, in the case of the measurement of angle of a corresponding component of the construction machinery, the angle measurement device is usually in a dynamic state due to the variety and high frequency of the operation of the construction machinery. In this state, the sensitive element of the acceleration transducer is subjected to not only gravity but also other forces which may form external interference for the angle measurement device. The external interference may cause the sensitive element of the acceleration transducer to displace, thereby decreasing measuring accuracy of the angle measurement device. For example, when a boom system of a concrete pump truck rotates around vertical axis, the angle measurement device on the boom system is subjected to gravity as well as a centripetal force resulted from the rotation, so as to result in a serious error of the angle parameter obtained by the angle measurement device on the boom system. Conventionally, for obtaining relatively accurate angle parameters, it is necessary to wait the boom system to hold still, which will affect the operating performance and efficiency of the concrete pump truck.

Although a filter device can be employed to reduce the effect of vibration on the accuracy of the angle measurement device, the filter cannot eliminate the adverse influence from the external interference on the angle measurement device.

The technical problems for the skilled in the art currently are how to reduce the effect of the external interference on the angle measurement, and how to improve the measuring accuracy of the angle measurement device.

## SUMMARY OF THE INVENTION

For the technical problems mentioned above, a first object of the present disclosure is to provide an angle measurement device and an angle measurement method, which are capable of reducing the effect of the external interference on the angle measurement and improving the measuring accuracy of the angle measurement device.

A second object of the present disclosure is to provide a construction machinery with the above-mentioned angle measurement device, so as to improve the operating performance and efficiency of the construction machinery.

To achieve the first object, the present disclosure provides an angle measurement device, which includes a microprocessor, a primary acceleration transducer, an output device, and at least one auxiliary acceleration transducer. There is a predetermined angle between a positive direction of the primary sensitive axis of the primary acceleration transducer and that of the auxiliary sensitive axis of the auxiliary acceleration transducer, and the predetermined angle is greater than 90° and less than 270°; the primary acceleration transducer and the auxiliary acceleration transducer are configured to output a first initial parameter and a second initial parameter respectively; the microprocessor in configured to obtain a first actual parameter of the primary acceleration transducer according to the first initial parameter, the second initial parameter and the predetermined angle, and to obtain an angle parameter according to the first actual parameter; the first actual parameter characterizes a parameter output by the primary acceleration transducer in the case of no external interference; the output device is configured to output the angle parameter.

Preferably, the predetermined angle is greater than 135° and less than 225°.

Preferably, the predetermined angle is 180°.

Preferably, the structure of the primary acceleration transducer is the same as that of the auxiliary acceleration transducer.

Preferably, the angle measurement device further includes a filter device configured to filter the first initial parameter output by the primary acceleration transducer and the second initial parameter output by the auxiliary acceleration transducer, and to output the filed first initial parameter and second initial parameter to the microprocessor.

Preferably, the angle measurement device further includes a storage device configured to store predetermined parameters which can be acquired by the microprocessor.

To achieve the second object, the present disclosure provides a construction machinery including a chassis and an executive component mounted on the chassis, and the distinction between the method and the prior art is that the executive component is provided with any of the above-mentioned angle measurement devices.

Preferably, the construction machinery is a concrete pump truck, and the executive component includes a boom system, each section of which is provided with the angle measurement device.

The present disclosure provides a angle measurement method including the following steps:

S100, obtaining a first initial parameter and a second initial parameter by a primary acceleration transducer and an auxiliary acceleration transducer, respectively, wherein there is a predetermined angle between a positive direction of the primary sensitive axis of the primary acceleration transducer and that of the auxiliary sensitive axis of the auxiliary acceleration transducer, and the predetermined angle is greater than 90° and less than 270°;

S200, obtaining a first actual parameter according to the first initial parameter, the second initial parameter and the predetermined angle, wherein the first actual parameter indicates the parameters output by the primary acceleration transducers without external interference;

S300, obtaining an angle parameter according to the first actual parameter.

Preferably, in step S100, a plurality of the auxiliary acceleration, transducers are configured to get a plurality of second initial parameters respectively.

Compared with the prior art, the angle measurement device provided by the present disclosure includes one primary acceleration transducer and at least one auxiliary acceleration transducer, and there is a predetermined angle between the positive direction of the primary sensitive axis of the primary acceleration transducer and that of the auxiliary sensitive axis of the auxiliary acceleration transducer, wherein the predetermined angle is greater than 90° and less than 270°. In this way, during the period of angle measurement, the primary acceleration transducer can obtain the first initial parameter according to the force applied to the angle measurement device in the direction of the primary sensitive axis, and the auxiliary acceleration transducer can obtain the second initial parameter according to the force applied to the angle measurement device in the direction of the auxiliary sensitive axis. There is a predetermined relationship between the first initial parameter and the second initial parameter. In addition, since the effect of the external interference on the primary acceleration transducer is the same as that on the auxiliary acceleration transducer, in the direction of the primary, the error or the first initial parameter resulted from the external interference, is equal to that the error of the second initial parameter resulted from the external interference. Thus, the errors can be eliminated according to the predetermined relationship between the first initial parameter and the second initial parameters, so as to obtain the first actual parameter for characterizing the value which should be output by the primary acceleration transducer without external interference. Then the angle parameters is obtained according to the first actual parameter. In such a way, the angle measurement device provided by the preset disclosure can reduce the error resulting from the external interference, and the measuring accuracy thereof is improved.

In a preferred solution, the predetermined angle between the positive direction of the primary sensitive axis and that of the auxiliary sensitive axis is 180°. In this case, the errors of the first initial parameter and the second initial parameter caused by the external interference are equal in value and opposite in direction, so that the first actual parameter can be obtained by calculating the average of the first initial parameter and the second initial parameter. In this embodiment, because the sensitive axes of the two acceleration transducers are opposite in direction, it is able to be ensured that the errors of the first initial parameter and the second initial parameter caused by the external interference are equal in value and opposite in direction. In this way, the first actual parameter can be obtained expediently, errors caused by the conversion of the trigonometric function can be avoided, and the measuring accuracy of the angle measurement device can be further improved. In addition, it can prevent the measuring result from the effect of the transverse force, and expand the application scopes and occasions for the angle measurement device.

In a preferred solution, the primary acceleration transducer and the auxiliary acceleration transducer are the same, which have the same measuring parameter setting and measuring reference, so that the same effect of external interference on the two acceleration transducers can be further ensured and the measuring accuracy of the angle measurement device is improved.

Because the angle measurement device possesses the above-mentioned technical effects, a construction machinery provided with the angle measurement device can possess the corresponding technical effects. Moreover, since the angle measurement device is capable of obtaining reliable angle parameters in dynamic states, such as rotating, swinging, and other states, the measurement of angle parameters can be achieved during the operation of the construction machinery, the operating performance and the working efficiency of the construction machinery can be improved. Based on the same measuring principle, the angle measurement method provided by the present disclosure thus possesses the corresponding technical effect.

## BRIEF DESCRIPTION OF THE DRAWINGS

Fig.1 is a structure block diagram of an angle measurement device according to a first embodiment of the present disclosure;

Fig.2 is a schematic diagram of the measuring principle of the angle measurement device according to the first embodiment of the present disclosure;

Fig.3 is a flowchart of the operation of the angle measurement device according to the first embodiment of the present disclosure, and it is also a flowchart of an angle measurement method according to the present disclosure;

Fig.4 is a schematic diagram of the measuring principle of an angle measurement device according to a second embodiment of the present disclosure.

## DETAILED DESCRIPTION OF THE INVENTION

The present disclosure will be described in detail hereinafter in conjunction with the drawings. The description in this section is only illustrative and explanatory, and should not be considered limit to the protection scope of the present disclosure.

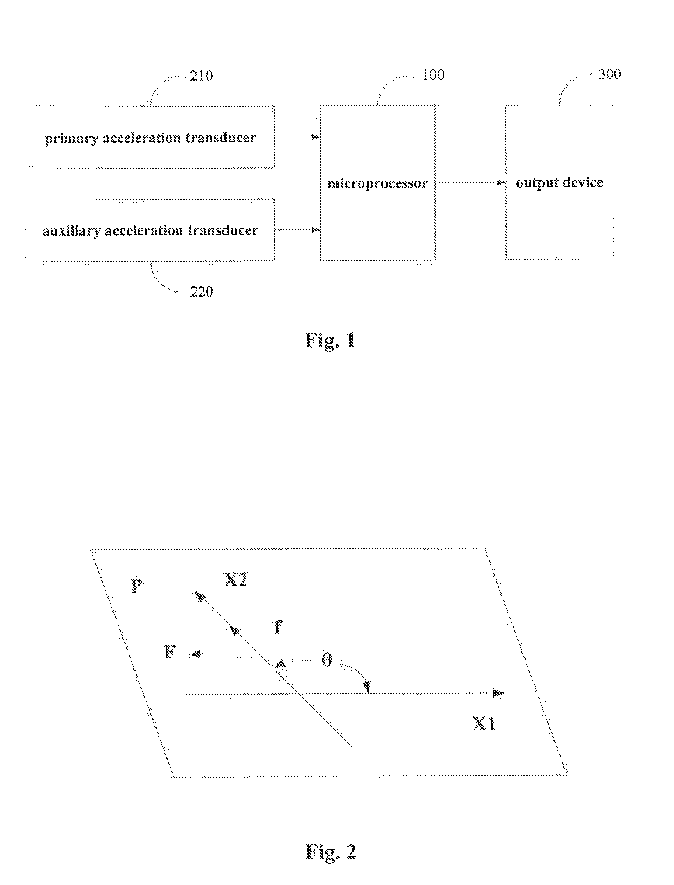

Referring to Fig.1 and Fig.2, Fig.1 is a structure block diagram of an angle measurement device according to a first embodiment of the present disclosure; and Fig.2 is a schematic diagram of the measuring principle of the angle measurement device according to the first embodiment of the present disclosure.

The angle measurement device according to the first embodiment includes a microprocessor 100, a primary acceleration transducer 210, an auxiliary acceleration transducer 220, and an output device 300. As shown in Fig.2, there is a predetermined angle θ between the positive direction of the primary sensitive axis X1 of the primary acceleration transducer 210 and that of the auxiliary sensitive axis X2 of the auxiliary acceleration transducer 220, which is greater than 90° and less than 270°.

The primary acceleration transducer 210 obtains a first initial parameter $a'_{X1}$ according to the force applied to the angle measurement device in the direction of the primary sensitive axis X1. The first initial parameter is a parameter for characterizing the acceleration of the angle measurement device in the direction of the primary sensitive axis X1. Likewise, the auxiliary acceleration transducer 220 obtains a second initial parameter $a'_{X2}$ according to the force applied to the angle measurement device in the direction of the auxiliary sensitive axis X2. The second initial parameter is a parameter for characterizing the acceleration of the angle measurement device in the direction of the auxiliary sensitive axis X2.

As shown in Fig.2, when the angle measurement device is subjected to a force F parallel to the direction of the primary sensitive axis X1, the component of the force F in the direction of the auxiliary sensitive axis X2 is $f$, $f = F \times \cos(\pi-\theta)$. According to the measuring principle of the acceleration transducer, the first initial parameter $a'_{X1}$ and the second initial parameter $a'_{X2}$ correlate with the force $F$ and the component force $f$, respectively. Assuming that there is no external interference, the primary acceleration transducer 210 should output a first actual parameter $a_{X1}$, and the auxiliary acceleration transducer 220 should output a second actual parameter $a_{X2}$,

An expression (3) can be determined: $a_{X2} = - a_{X1} \times \cos(\pi-\theta)$ The microprocessor 100 is used to obtain the first actual parameter $a_{x1}$ according to the first initial parameter $a'_{X1}$, the second initial parameter $a'_{X2}$ and the predetermined angle θ; and further obtain an angle parameter $a$ according to the first actual parameter $a_{X1}$;

Output device 300 is used to output the obtained angle parameter $a$, so that operators or operation system of the construction machinery can get the measuring result of the angle measurement device and then further can determine the tilted angle of the component provided with the angle measurement device according to the predetermined strategy.

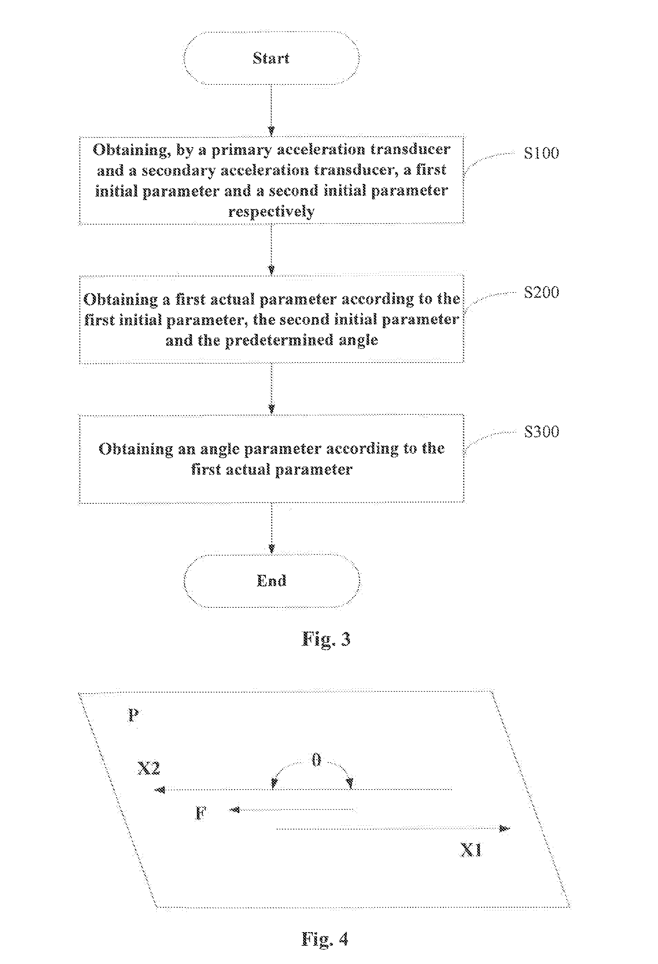

Referring to Fig.3, it is a flowchart of the operation of the angle measurement device according to the first embodiment of the present disclosure, while it is also a flowchart of an angle measurement method of the present disclosure. When the angle measurement device is subjected to the force $F$ parallel to the direction of the primary sensitive axis X1, the angle parameter can be obtained by the following steps:

Step S100, the primary acceleration transducer 210 and the auxiliary acceleration transducer 220 acquire a first initial parameter $a'_{X1}$ and a second initial parameter $a'_{X2}$ respectively;

Step S200, a first actual parameter $a_{X1}$ is obtained according to the first initial parameter $a'_{X1}$, the second initial parameter $a'_{X2}$ the predetermined angle θ.

This step can be performed via the microprocessor 100 by the following way:

Assuming that Δ$a$ is the error generated by the primary acceleration transducer 210 in the direction of the primary sensitive axis X1 due to external interference, an expression (1) can be derived:

$$a'_{X1} = a_{X1} + \Delta a$$

Likewise, assuming that Δ$a$ is also the error generated by the auxiliary acceleration transducer 220 in the direction of the primary sensitive axis X1 due to external interference, an expression (2) can be derived:

$$a'_{X2} / \cos(\pi - \theta) = a_{X2} / \cos(\pi - \theta) + \Delta a$$

According to the formula (3): $a_{X2} = - a_{X1} \times \cos(\pi-\theta)$, the expression (1) is substituted into the expression (2) to eliminate Δ$a$, so that a formula (4) can be derived:

$$a_{X1} = (a'_{X1} - a'_{X2} / \cos(\pi - \theta)) / 2$$

in this way, the first actual parameter $a_{X1}$ is acquired, and thus providing the precondition for the next step of obtaining the angle parameter accurately.

Step S300, the angle parameter $a$, i.e. the measuring result of the angle measurement device, can be obtained according to the first actual parameter $a_{X1}$. Particularly,

$$a = \arcsin((\alpha_{X1} - zeroset)/sensitivity)$$

wherein a indicates the angle parameter, zeroset indicates a parameter output by the primary acceleration transducer 210 located at zero position, and sensitivity is the sensitivity coefficient of the angle measurement device. As can be seen, the angle parameter a is derived from the trigonometric function. Zcroset and sensitivity can be preset in the angle measurement device, thus avoiding the effect on the measuring result caused by transverse forces and enlarging the scope and occasion where the angle measurement device can be applied.

According to the above description, in a preferred embodiment, in order to make the effect of external interference on the primary acceleration transducer 210 equal to that on the auxiliary acceleration transducer 220, the same acceleration transducers are employed as the primary acceleration transducer 210 and the auxiliary acceleration transducer 220 respectively, such that they have same preset measuring parameters and measuring criterions.

For further improving the measuring accuracy of the angle measurement device, the angle measurement device can include a plurality of auxiliary acceleration transducers 220, and obtain a plurality of second initial parameters $a'_{X2}$ respectively, and then calculate a plurality of middle parameters from the expressions (1), (2), (3) described above, and then take the average value of the plurality of middle parameters as the first actual parameter $a_{x1}$. In this way, the error in the case of single auxiliary acceleration transducer 220 can be eliminated better, and the measuring accuracy is improved.

Assuming that the primary sensitive axis X1 and the auxiliary sensitive axis X2 form a plane P. When the force generated by external interference is a transverse force parallel to the plane P and perpendicular to the force $F$, $a'_{X2}$ will be incompletely corresponding to the component force $f$ of the force $F$, and thus resulting in corresponding errors in the expression (2), and further increasing the errors of the angle parameters $a$. For reducing the errors caused by the transverse forces, the predetermined angle θ can be limited to, for example, greater than 135° and less than 225°. Moreover, in order to reduce thoroughly the errors caused by transverse forces, a second embodiment of the present disclosure provides another angle measurement device.

Compared with the angle measurement device provided by the first embodiment, the predetermined angle θ between the positive direction of the primary sensitive axis X1 of the primary acceleration transducer 210 and that of the auxiliary sensitive axis X2 of the auxiliary acceleration transducer 220 is equal to 180 degree in the second embodiment. As shown in Fig.4 which is the schematic diagram showing the measuring principle of an angle measurement device according to the second embodiment of the present disclosure, the primary sensitive axis X1 is parallel to the auxiliary sensitive axis X2, while the positive directions of the primary sensitive axis X1 is opposite to that of the auxiliary sensitive axis X2, i.e., the predetermined angle θ is equal to 180°. Thus, the first initial parameter $a'_{X1}$ and the second initial parameter $a'_{X2}$ output respectively by the primary acceleration transducer 210 and the auxiliary acceleration transducer 220 will not change due to the transverse forces, so as to avoid the decrease of the measuring accuracy due to the transverse forces and ensure the measuring accuracy of the angle measurement device.

When θ is 180°, correspondingly,

the expression (2) is:

$$a'_{X2} = a_{X2} + \Delta a$$

the expression (3) is:

$$a_{X1} = - a_{X2}$$

the expression (4) is:

$$a_{X1} = (a'_{X1} - a'_{X2})/2$$

Thus, the first actual parameter $a_{X1}$ can be obtained more conveniently; while errors caused by the conversion of the trigonometric function can be avoided.

It should be noted that, the spatial relationship between the primary sensitive axis X1 and the auxiliary sensitive axis X2 is not limited to cross and parallel as described above, which can be non-coplanar. In the case that the spatial relationship between the primary sensitive axis X1 and the auxiliary sensitive axis X2 is non-coplanar, the predetermined angle θ is formed by projecting the positive direction of the primary sensitive axis X1 and the positive direction of the auxiliary sensitive axis X2 on a reference plane which is parallel to both the primary sensitive axis X1 and the auxiliary sensitive axis X2. When the spatial relationship between the sensitive axis X1 and the auxiliary sensitive axis X2 is any of the above, the predetermined angle θ between the positive direction of the primary sensitive axis X1 and the positive direction of the auxiliary sensitive axis X2 can be the angle between the positive direction of the auxiliary sensitive axis X2 and the extending direction of a reference ray, wherein the starting point of the reference ray is a predetermined point on the primary sensitive axis X1, and the extending direction of the reference ray is parallel to the positive direction of the auxiliary sensitive axis X2. The objective of the present disclosure can be achieved if only the above conditions are met.

Generally, the angle measurement device further includes a filter device, which is used to filter the signals output by the primary acceleration transducer 210 and the auxiliary acceleration transducer 220 to remove the predetermined interference signal, and to output the filtered signals to the microprocessor. In this way, the accuracy of the first initial parameter $a'_{X1}$ and the second initial parameter $a'_{X2}$ are improved. Besides, a separate storage device can be provided to store the parameter zeroset, sensitivity coefficient sensitivity or other predetermined parameters. Of course, the corresponding parameters can also be stored in the microprocessor 100.

Based on the above angle measurement device, the present disclosure provides a construction machinery. The construction machinery includes a chassis and an executive component which is provided with any of the angle measurement devices described above. In particular, the construction machinery can be a concrete pump truck which includes a chassis and a boom system mounted rotatablely on the chassis. The boom system is provided with a plurality of ami sections hinged sequentially, on which the angle measurement device can be mounted to determine the angle of each of the arm sections. Thus, even when the boom system is rotating relative to the chassis, the above angle measurement device is capable of obtaining the angle of the corresponding arm section accurately, such that it is unnecessary to wait the boom system to be static to determine the tilted angle of each arm section, which improves the operating performance and working efficiency.

The above-mentioned description is just the preferred embodiments of the present disclosure. It should be apparent to the skilled in the art that some improvement and modification may be made without departing from the principles of the present disclosure, for example, the primary acceleration transducer 210 can be a dual-axis acceleration transducer while correspondingly the auxiliary acceleration transducer 220 is also a dual-axis acceleration transducer, or two auxiliary acceleration transducers 220 can be provided, etc.. These improvements and modifications should be included in the scope of protection of the present disclosure.

## Claims

1. An angle measurement device, comprising a microprocessor (100), a primary acceleration transducer (210), and an output device (300), **characterized in that** the angle measurement device further comprises at least one auxiliary acceleration transducer (220), and there is a predetermined angle between a positive direction of a primary sensitive axis (X1) of the primary acceleration transducer (210) and a positive direction of a auxiliary sensitive axis (X2) of the auxiliary acceleration transducer (220), and the predetermined angle is greater than 90° and less than 270°;
the primary acceleration transducer (210) and the auxiliary acceleration transducer (220) are configured to output a first initial parameter and a second initial parameter respectively;
the microprocessor (100) is configured to obtain a first actual parameter of the primary acceleration transducer (210) according to the first initial parameter, the second initial parameter and the predetermined angle, and to obtain an angle parameter according to the first actual parameter; the first actual parameter characterizes a parameter of the primary acceleration transducer in the case of no external interference; and
the output device (300) is configured to output the angle parameter.

2. The angle measurement device according to claim 1, wherein the predetermined angle is greater than 135° and less than 225°.

3. The angle measurement device according to claim 2, wherein the predetermined angle is 180°.

4. The angle measurement device according to any one of claims 1-3, wherein the structure of the primary acceleration transducer (210) is the same as that of the auxiliary acceleration transducer (220).

5. The angle measurement device according to any one of claims 1-3, further comprising a filter device, which is configured to filter the first initial parameter and the second initial parameter output by the primary acceleration transducer (210) and the auxiliary acceleration transducer (220), and to output the filtered first initial parameter and second initial parameter to the microprocessor (100).

6. The angle measurement device according to any one of claims 1-3, further comprising a storage device for storing a preset parameter which can be acquired by the microprocessor (100).

7. A construction machinery, comprising a chassis and an executive component mounted on the chassis, **characterized in that** the executive component is provided with the angle measurement device according to any one of claims 1-6.

8. The construction machinery according to claim 7, wherein the construction machinery is a concrete pump truck, and the executive component comprises a boom system; each arm section of the boom system is provided with the angle measurement device.

9. An angle measurement method, comprising following steps:

S100, obtaining a first initial parameter and a second initial parameter by a primary acceleration transducer (210) and an auxiliary acceleration transducer (220) respectively; wherein there is a predetermined angle between a positive direction of a primary sensitive axis (X1) of the primary acceleration transducer (210) and a positive direction of an auxiliary sensitive axis (X2) of the auxiliary acceleration transducer (220), and the predetermined angle is greater than 90° and less than 270°;

S200, obtaining a first actual parameter according to the first initial parameter, the second initial parameter and the predetermined angle, the first actual parameter characterizing a parameter output by the primary acceleration transducer in the case of no external interference;

S300, obtaining an angle parameter according to the first actual parameter.

10. The angle measurement method according to claim 9, wherein in Step 100, a plurality of the auxiliary acceleration transducers (220) are employed to obtain a plurality of the second initial parameters.

Fig. 1

Fig. 2

Start

Obtaining, by a primary acceleration transducer and a secondary acceleration transducer, a first initial parameter and a second initial parameter respectively — S100

Obtaining a first actual parameter according to the first initial parameter, the second initial parameter and the predetermined angle — S200

Obtaining an angle parameter according to the first actual parameter — S300

End

Fig. 3

P

X2

0

F

X1

Fig. 4

# INTERNATIONAL SEARCH REPORT

| | International application No. |
|---|---|
| | PCT/CN2010/074215 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC: G01B21/22;G01B21/24;G01B21/00;G01C 21;G01C 9;E04G 21

Documentation searched other than minimum documentation to the extent that such documents are included in the fields searched

Electronic data base consulted during the international search (name of data base and, where practicable, search terms used)

WPI;EPODOC;CNPAT;CNKI: angular,angle?, accelerometer?,accelerat+, arm?,beam?, concrete pump vehile,mov???, dynamic+

**C. DOCUMENTS CONSIDERED TO BE RELEVANT**

| Category* | Citation of document, with indication, where appropriate, of the relevant passages | Relevant to claim No. |
|---|---|---|
| A | CN 101368824 A(MEMSIC WUXI INC)18 Feb.2009(18.02.2009) see pages 4-5 in the description and figure 5 | 1-10 |
| A | CN 1975070 A(SANY HEAVY IND CO LTD)06 Jun.2007(06.06.2007) see the whole text | 1-10 |
| A | SHI,Ying. The measurement and ANN prediction of human joint angle based on SEMG recognition. Chinese doctoral dissertations & master's theses full-text database (master) Medicine and health sciences.15 Jul.2006,No.7,pages 27-29,36,ISSN 1671-6779 | 1-10 |

☒ Further documents are listed in the continuation of Box C.     ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 10 Aug.2010 （10.08.2010） | **02 Sep. 2010 (02.09.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | **LI，Haixia** Telephone No. (86-10)62085743 |

Form PCT/ISA /210 (second sheet) (July 2009)

# INTERNATIONAL SEARCH REPORT

| | International application No. |
|---|---|
| | PCT/CN2010/074215 |

C (Continuation).     DOCUMENTS CONSIDERED TO BE RELEVANT

| Category* | Citation of document, with indication, where appropriate, of the relevant passages | Relevant to claim No. |
|---|---|---|
| A | XIONG, Jing et al. Method of measuring and calibrating the angle of the knee joint. Mechanical & electrical engineering magazine.20 Dec.2009,No.12, pages 13-16,ISSN 1001-4551 | 1-10 |
| A | DE 10348570 A1(SCHUBACH R)12 May 2005(12.05.2005) see the whole text | 1-10 |
| A | JP 7151559 A(JECO KK)16 Jun.1995(16.06.1995) see the whole text | 1-10 |
| A | DE 19620124 C1(GERLACH NORBERT et al)31 Jul.1997(31.07.1997) see the whole text | 1-10 |
| A | GB 1474751 A(FERRANTI LTD)25 May 1977(25.05.1977) see the whole text | 1-10 |
| A | JP 11325881 A(RITSUMEIKAN et al)26 Nov.1999(26.11.1999) see the whole text | 1-10 |
| A | JP 8128825 A(TAMAGAWA SEIKI CO LTD)21 May 1996(21.05.1996) see the whole text | 1-10 |
| A | CN 1678806 A(PUTZMEISTER AG)05 Oct.2005(05.10.2005) see the whole text | 1-10 |
| A | CN 101525944 A(BEIJING EASYSOLUTION ELECTRONI)09 Sept.2009 (09.09.2009) see the whole text | 1-10 |
| A | JP 9328900 A(YANO FUSAO et al)22 Dec.1997(22.12.1997) see the whole text | 1-10 |

Form PCT/ISA /210 (continuation of second sheet ) (July 2009)

# INTERNATIONAL SEARCH REPORT
## Information on patent family members

| International application No. |
|---|
| PCT/CN2010/074215 |

| Patent Documents referred in the Report | Publication Date | Patent Family | Publication Date |
|---|---|---|---|
| CN 101368824 A | 18.02.2009 | NONE | |
| JP 7151559 A | 16.06.1995 | NONE | |
| DE 19620124 C1 | 31.07.1997 | NONE | |
| GB 1474751 A | 25.05.1977 | NONE | |
| JP 11325881 A | 26.11.1999 | JP 3394979 B2 | 07.04.2003 |
| CN 1975070 A | 06.06.2007 | EP 1939134 A2 | 02.07.2008 |
| | | EP 1939134 A3 | 22.07.2009 |
| | | US 2008162005 A1 | 03.07.2008 |
| | | WO 2008080266 A1 | 10.07.2008 |
| | | CN 100591880 C | 24.02.2010 |
| | | KR 20080063022 A | 03.07.2008 |
| | | RU 2344923 C1 | 27.01.2009 |
| JP 8128825 A | 21.05.1996 | NONE | |
| CN 1678806 A | 05.10.2005 | WO 2004020765 A1 | 11.03.2004 |
| | | EP 1537282 A1 | 08.06.2005 |
| | | EP 1537282 B1 | 20.12.2006 |
| | | US 2005278099 A1 | 15.12.2005 |
| | | US 7729832 B2 | 01.06.2010 |
| | | JP 2005536369 T | 02.12.2005 |
| | | DE 10240180 A1 | 11.03.2004 |
| | | AT 348929 T | 15.01.2007 |
| | | AU 2003246643 A1 | 19.03.2004 |
| | | CN 100410478 C | 13.08.2008 |
| | | CN 101328767 A | 24.12.2008 |
| | | ES 2277141 T3 | 01.07.2007 |
| | | KR 20050036978 A | 20.04.2005 |
| CN 101525944 A | 09.09.2009 | NONE | |
| JP 9328900 A | 22.12.1997 | NONE | |
| DE 10348570 A1 | 12.05.2005 | NONE | |

Form PCT/ISA /210 (patent family annex) (July 2009)

# INTERNATIONAL SEARCH REPORT

International application No.

PCT/CN2010/074215

**CLASSIFICATION OF SUBJECT MATTER**

G01B 21/22(2006.01)i
G01C 21/12(2006.01)i
G01C 9/00(2006.01)i
E04G 21/04(2006.01)i

Form PCT/ISA /210 (extra sheet) (July 2009)

**EP 2 360 446 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200910260064